(19) Europäisches Patentamt
European Patent Office
Office européen des brevets

(11) **EP 3 126 447 B1**

(12) **FASCICULE DE BREVET EUROPEEN**

(45) Date de publication et mention de la délivrance du brevet:
**25.10.2017 Bulletin 2017/43**

(21) Numéro de dépôt: **15718968.9**

(22) Date de dépôt: **23.03.2015**

(51) Int Cl.:
***C08L 77/00*** *(2006.01)*      ***C08L 77/06*** *(2006.01)*

(86) Numéro de dépôt international:
**PCT/FR2015/050721**

(87) Numéro de publication internationale:
**WO 2015/150662 (08.10.2015 Gazette 2015/40)**

(54) **COMPOSITIONS DE POLYAMIDE ET DE PEBA POUR L'INJECTION DE PIÈCES RIGIDES RÉSISTANT A LA FATIGUE**

ZUSAMMENSETZUNGEN AUS POLYAMID UND PEBA ZUR INJEKTION VON ERMÜDUNGSBESTÄNDIGEN STEIFEN TEILEN

COMPOSITIONS OF POLYAMIDE AND PEBA FOR THE INJECTION OF FATIGUE-RESISTANT RIGID PARTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2014 FR 1452791**

(43) Date de publication de la demande:
**08.02.2017 Bulletin 2017/06**

(73) Titulaire: **Arkema France**
**92700 Colombes (FR)**

(72) Inventeurs:
• **FERNAGUT, François**
 **27120 Le Val David (FR)**
• **EUSTACHE, René-Paul**
 **27170 Combon (FR)**
• **SABARD, Mathieu**
 **27470 Serquigny (FR)**
• **DEYRAIL, Yves**
 **27930 Aviron (FR)**

(56) Documents cités:
**EP-A1- 1 482 011      WO-A1-2010/089902
WO-A2-2007/144531    US-A- 5 153 275**

**EP 3 126 447 B1**

**Description**

La présente invention concerne des compositions de polyamides et de Peba, notamment substantiellement dépourvu de transparence, utilisées pour l'injection de pièces présentant un compromis intéressant de rigidité, de choc, de résistance à la fatigue et d'injectabilité, lesdites compositions comprenant éventuellement l'ajout de charges minérales type fibre de verre, talc ou wollastonite pour la réalisation de matériaux plus rigides, ou éventuellement l'ajout d'un modifiant choc pour augmenter le niveau de résistance au choc.

La présente invention concerne également un procédé de préparation desdites compositions ainsi que les objets fabriqués avec lesdites compositions telles que des fibres, tissus, films, feuilles, joncs, tubes, pièce injectée, notamment des articles de sport tels que chaussure de ski ou une partie de chaussure de ski ou chaussure rigide à crampon, notamment chaussure de soccer ou de football américain.

Les fabricants d'articles de sport sont confrontés à plusieurs défis.

Les articles doivent évoluer vers plus de légèreté afin de diminuer au maximum l'énergie dépensée lors de leur utilisation.

Ils doivent également permettre au sportif d'obtenir les sensations nécessaires au contrôle des mouvements et transmettre rapidement les impulsions musculaires.

La rigidité d'une pièce est directement liée au module élastique du matériau constitutif de cette pièce et au cube de l'épaisseur des parois.

Un matériau de module élevé permet de diminuer les épaisseurs des pièces donc de gagner beaucoup sur le poids de celles-ci tout en gardant la rigidité nécessaire à un bon retour élastique indispensable au sportif.

Dans de nombreux articles de sport, il faut également garantir une bonne résistance à l'impact (choc à froid sur une chaussure de ski par exemple) et également une bonne résistance à des sollicitations répétées (pliage de la semelle d'une chaussure de football par exemple).

Par ailleurs, les articles doivent pouvoir être injectés facilement et permettre l'obtention de pièces présentant un aspect irréprochable et une aptitude à la coloration dans des couleurs variées.

Les copolymères PEBA appartiennent à la classe particulière des polyétheresteramides lorsqu'ils résultent de la copolycondensation de séquences polyamide à extrémités carboxyliques réactives avec des séquences polyéther à extrémités réactives, qui sont des polyétherpolyols (polyétherdiols), les liaisons entre les blocs polyamide et les blocs souples polyéther étant des liaisons ester ou encore à la classe des polyétheramides lorsque les séquences polyéther sont à extrémités amine.

Différents PEBA sont connus pour leurs propriétés physiques telles que leur flexibilité, leur tenue au choc, leur facilité de mise en oeuvre par injection.

Ainsi dans l'art antérieur, CH655941 décrit un mélange de PEBA, comprenant éventuellement un polyamide, avec une copolyoléfine dont l'ajout procure une compatibilité et une processabilité du mélange ainsi qu'une amélioration de la flexibilité et de la résistance à l'impact à froid.

US 5,140,065 décrit une composition comprenant de 1-95% d'au moins un bloc polyétherpolyamide, de 1-95% d'au moins un bloc polyétheresterpolyamide, de 95-5% d'au moins un copolyamide amorphe et de 0,1 à 70% d'au moins une copolyoléfine greffée avec un acide dicarboxylique insaturée. Aucune application, notamment pour la fabrication d'articles de ski n'est décrite.

FR198519421 décrit des mélanges de polyamides, de PEBA et d'élastomères thermoplastiques pour l'injection mais sans mention d'application.

US2005/0234215 concerne des copolymères polyamide-PEBA, le poids moléculaire de la partie polyéther du PEBA étant situé dans une gamme de 200 à 40000 g/mol, dont les applications sont des fibres élastiques ou des produits possédant un « toucher doux » pour les mains et la peau.

US2007/0179252 décrit une composition comprenant un homo ou copolyamide transparent, un polymère dont la Tg est inférieure à 80°C et au moins un colorant photochromique, pour la préparation notamment de lentilles photochromiques.

US4,218,549 concerne une composition comprenant un homopolymère de polyamide issu de la condensation de lactames ou d'acides omega-amino carboxyliques présentant au moins 10 carbones, un PEBA constitué d'un polyamide issu de la condensation de lactames ou d'acides omega-amino carboxyliques présentant au moins 10 carbones, d'un alpha, omega-dihydroxy(polytetrahydrofurane) de poids moléculaire compris de 160 à 3000 et d'un diacide carboxylique, pour la préparation de tubes.

US2013/0172484 décrit une composition comprenant de 10 à 50% en poids d'un polyamide aliphatique, de 1-10% en poids d'un copolymère élastomère éthylène-oléfine greffé, de 1-10% en poids d'un copolymère élastomère propylène-oléfine greffé, et de 35-85% en poids d'un PEBA présentant un shore D de 50-60, tel que mesuré selon ASTM D2240.

La demande WO 07/144531 concerne un alliage transparent comprenant de 1-99% en poids d'un copolymère présentant une transparence élevée comprenant des motifs amides comportant au moins un motif cycloaliphatique et

2

des motifs souples éthers, et 99-1% d'au moins un constituant polymère choisi notamment parmi les PEBA et de 0-50% en poids d'un autre polyamide ou copolyamide à motif éther.

EP 1482011 décrit une composition de résine thermoplastique ayant une résistance à l'hydrolyse améliorée. Ladite composition est obtenue par polymérisation d'un composé triblock polyéther diamine avec un lactame ou un aminoacide.

La modification des polyamides par des modifiants choc, dont les PEBA ainsi que le renfort mécanique de PA par des charges minérales sont donc déjà décrits dans la littérature.

Cependant, ni l'obtention de bonnes propriétés de résistance à la flexion alternée, ni le comportement rhéologique optimal pour l'injection d'articles de sport ne sont décrits.

Par ailleurs, l'ajout de modifiants choc tels que des polyoléfines, notamment greffées, en particulier par de l'anhydride maléique, permettent d'améliorer le niveau de choc des polyamides mais augmentent en parallèle de manière très significative la viscosité à l'état fondu ce qui rend le produit difficilement injectable surtout pour faire des pièces fines.

L'invention consiste en la mise au point de mélanges polyamide et PEBA présentant un compromis de rigidité, de choc et de résistance à la flexion alternée et ayant une fluidité optimisée pour l'injection de composant d'articles de sport (semelles, coques de chaussures de ski, chaussures rigide à crampons...).

La demanderesse à ainsi découvert de façon surprenante que la sélection de PEBA particuliers le plus mou possible, c'est-à-dire étant suffisamment mou pour le renforcement choc mais suffisamment compatible pour limiter la séparation de phase et obtenir une bonne adhésion avec la matrice et conserver la processabilité, en mélange avec des polyamides, le cas échéant additionnés de charges minérales et/ou de modifiants choc, permettait la préparation de compositions présentant un bon compromis entre le niveau choc, la rigidité et la processabilité pour l'injection de pièces fines, notamment destinées à la fabrication d'articles de sport, en particulier de chaussures de ski ou une partie de chaussure de ski.

La présente invention concerne une composition comprenant, en poids, le total étant égal à 100 % :

(A) 50 à 95% d'au moins un polyamide semi-cristallin de formule A/Z dans laquelle,

- A est un motif répétitif aliphatique choisi parmi un motif obtenu à partir de la polycondensation d'au moins un aminoacide et un motif obtenu à partir de la polycondensation d'au moins un lactame ou un motif X.Y obtenu à partir de la polycondensation :

  - d'au moins une diamine, ladite diamine étant choisie parmi une diamine aliphatique linéaire ou ramifiée, une diamine cycloaliphatique et une diamine aromatique ou un mélange de ceux-ci, et
  - d'au moins un diacide carboxylique, ledit diacide état choisi parmi :

    un diacide aliphatique, un diacide cycloaliphatique et un diacide aromatique, ladite diamine et ledit diacide comprenant de 4 à 36 atomes de carbone, avantageusement de 6 à 18 atomes de carbone, et

- Z représente un autre polyamide et est compris de 0 à 20% ;

(B) 5 à 50% d'au moins d'un copolyamide semi-cristallin à motifs amides (Ba1) et à motifs polyéthers (Ba2), ayant une température de transition vitreuse (Tg) inférieure à 75°C, ledit motif amide (Ba1) correspondant à un motif répétitif aliphatique choisi parmi un motif obtenu à partir d'au moins un aminoacide et un motif obtenu à partir d'au moins un lactame, ou un motif X.Y obtenu à partir de la polycondensation :

  - d'au moins une diamine, ladite diamine étant choisie parmi une diamine aliphatique linéaire ou ramifiée et une diamine aromatique ou un mélange de ceux-ci, et
  - d'au moins un diacide carboxylique, ledit diacide étant choisi parmi :

    un diacide aliphatique et un diacide aromatique, ladite diamine et ledit diacide comprenant de 4 à 36 atomes de carbone, avantageusement de 6 à 18 atomes de carbone ;

lesdits motifs polyéthers (Ba2) étant issus d'au moins un polyalkylène éther polyol, notamment un polyalkylène éther diol, le mélange (A) + (B) présentant un module de flexion compris de 600 à moins de 1000 MPa, en particulier de 750 à moins de 1000, tel que déterminé selon la norme ISO 178 :2010 ;

(C) 0 à 20% en poids de fibres et/ou charges,

(D) 0 à 20% d'au moins un modifiant choc,

(E) 0 à 5% d'au moins un additif choisi parmi les stabilisants, les colorants, à l'exception d'un colorant photochromique, les plastifiants ou un mélange de ceux-ci,

pour la fabrication d'un article de sport.

Dans toute la description, tous les pourcentages de (A), (B), (C), (D) et (E) sont indiqués en poids.

Le terme "polyamide" employé dans la présente description couvre aussi les copolyamides, pouvant contenir des tiers monomères en une proportion n'affectant pas les qualités essentielles des polyamides.

Le terme "semi-cristallin" couvre les (co)polyamides présentant à la fois une température de transition vitreuse Tg et une température de fusion Tf déterminés respectivement selon la norme 11357-2:2013 et 11357-3:2013.

Tg : Point d'inflexion au deuxième passage par DSC (DSC = analyse thermique différentielle)

Tg : température de transition vitreuse mesurée selon une DMA. Il s'agit de la température donnée par le maximum du pic de la tangente delta.

S'agissant du constituant (A) :

A : motif répétitif aliphatique

Dans une première variante de l'invention, le motif répétitif aliphatique A est obtenu à partir d'un acide aminocarboxylique comprenant de 9 à 12 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12), avantageusement l'acide aminocarboxylique est le l'acide 11-aminoundécanoïque.

Dans une deuxième variante de l'invention, le motif répétitif aliphatique A est obtenu à partir d'un lactame comprenant de 9 à 12 atomes de carbone. Il peut ainsi être choisi parmi le décanolactame (noté 10), l'undécanolactame (noté 11) et le laurolactame ou lauryllactame (noté 12), avantageusement le lactame est le l'undécanolactame.

De manière plus particulièrement préférée, le motif répétitif A est obtenu à partir d'un seul acide aminocarboxylique ou d'un seul lactame.

Toutefois, on peut tout à fait envisager de mettre en oeuvre, pour l'obtention de ce même motif A, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

A : motif répétitif X.Y

Le motif répétitif X.Y est un motif obtenu à partir de la polycondensation d'au moins une diamine aliphatique linéaire, ou d'au moins une diamine cycloaliphatique ou d'au moins une diamine aromatique ou d'un mélange de deux ou plusieurs de celles-ci et d'au moins un diacide carboxylique aliphatique ou d'au moins un diacide carboxylique cycloaliphatique ou d'au moins un diacide carboxylique aromatique.

Les proportions molaires en diamine et en diacide carboxylique sont préférentiellement stoechiométriques.

La diamine ainsi que le diacide carboxylique comprennent chacun de 4 à 36 atomes de carbone et, avantageusement, de 6 à 18 atomes de carbone.

La diamine aliphatique utilisée pour l'obtention de ce motif répétitif X.Y est une diamine aliphatique qui présente une chaine principale linéaire comprenant au moins 4 atomes de carbone.

Cette chaine principale linéaire peut, le cas échéant, comporter un ou plusieurs substituant méthyle et/ou éthyle ; dans cette dernière configuration, on parle de "diamine aliphatique ramifiée". Dans le cas où la chaine principale ne comporte aucun substituant, la diamine aliphatique est dite "diamine aliphatique linéaire". Qu'elle comporte ou non des substituant méthyle et/ou éthyle sur la chaine principale, la diamine aliphatique utilisée pour l'obtention de ce motif répétitif X.Y comprend de 4 à 36 atomes de carbones, avantageusement de 4 à 18 atomes de carbone, avantageusement de 6 à 18 atomes de carbone, avantageusement de 6 à 14 atomes de carbone.

Lorsque cette diamine est une diamine aliphatique linéaire, elle répond alors à la formule $H_2N-(CH_2)_x-NH_2$ et peut être choisie par exemple parmi la butanediamine, la pentanediamine, l'hexanediamine, l'heptanediamine, l'octanediamine, la nonane-diamine, la décanediamine, l'undécanediamine, la dodécanediamine, la tridécanediamine, la tétradécanediamine, l'hexadécanediamine, l'octadécanedia-mine et l'octadécènediamine. Les diamines aliphatiques linéaires qui viennent d'être citées peuvent être toutes bio ressourcées au sens de la norme ASTM D6866.

Lorsque cette diamine est une diamine aliphatique ramifiée, elle peut notamment être la méthyl-2 pentanediamine ou la 2-méthyl-1,8-octanediamine. La diamine cycloaliphatique peut être choisie par exemple parmi le bis(3,5-dialkyl-4-aminocyclohexyl)-méthane, le bis(3,5-dialkyl-4-aminocyclohexyl)éthane, le bis(3,5-dialkyl-4-aminocyclo-

hexyl)-propane, le bis(3,5-dialkyl-4-aminocyclo-hexyl)-butane, le bis-(3-méthyl-4-aminocyclohexyl)-méthane ou 3'-diméthyl-4,4'-diamino-dicyclohexyl-méthane couramment dénommé "BMACM" ou "MACM" (et noté B ci-après), le p-bis(aminocyclohexyl)-méthane couramment dénommé "PACM" (et noté P ci-après), l'isopropylidènedi(cyclohexylamine) couramment dénommé "PACP", l'isophorone-diamine (notée IPD ci-après) et le 2,6-bis(amino méthyl)norbornane couramment dénommé "BAMN".

Une liste non-exhaustive de ces diamines cycloaliphatiques est donnée dans la publication "Cycloaliphatic Amines" (Encyclopaedia of Chemical Technology, Kirk-Othmer, 4th Edition (1992), pp. 386-405).

La diamine aromatique peut être choisie parmi la 1,3-xylylène diamine et la 1,4-xylylène diamine.

Le diacide carboxylique peut être choisi parmi les diacides carboxyliques aliphatiques, linéaires ou ramifiés, les diacides carboxyliques cycloaliphatiques et les diacides carboxyliques aromatiques.

Lorsque l'acide dicarboxylique est aliphatique et linéaire, il peut être choisi parmi l'acide succinique (4), l'acide pentanedioïque (5), l'acide adipique (6), l'acide heptanedioïque (7), l'acide octanedioïque (8), l'acide azélaïque (9), l'acide sébacique (10), l'acide undécanedioïque (11), l'acide dodécanedioïque (12), l'acide brassylique (13), l'acide tétradécanedioïque (14), l'acide hexadécanedioïque (16), l'acide octadécanedioïque (18), l'acide octadécènedioïque (18), l'acide eicosanedioïque (20), l'acide docosanedioïque (22) et les dimères d'acides gras contenant 36 carbones.

Les dimères d'acides gras mentionnés ci-dessus sont des acides gras dimérisés obtenus par oligomérisation ou polymérisation d'acides gras monobasiques insaturés à longue chaîne hydrocarbonée (tels que l'acide linoléïque et l'acide oléïque), comme décrit notamment dans le document EP 0 471 566.

Lorsque le diacide carboxylique est cycloaliphatique, il peut comporter les squelettes carbonés suivants : norbornyl méthane, cyclohexane, cyclohexylméthane, dicyclohexylméthane, dicyclohexylpropane, di(méthylcyclohexyl) ou di(méthylcyclo-hexyl)propane.

Lorsque le diacide carboxylique est aromatique, il peut être choisi parmi l'acide téréphtalique (noté T), l'acide isophtalique (noté I) et un acide naphtalénique.

A titre d'exemple, les motifs X.Y sont choisis parmi le polybutylène adipamide (PA-4.6); le polyhexaméthylène adipamide (PA-6.6); le polyhexaméthylène azélamide (PA-6.9); le polyhexaméthylène sébaçamide (PA-6.10); le polyhexaméthylène dodécanamide (PA-6.12); le polydécaméthylène dodécanamide (PA-10.12); le polydécaméthylène sébaçanamide (PA-10.10) et le polydodecaméthylène dodécanamide (PA-12.12), avantageusement le motif X.Y représente le polydécaméthylène sébaçanamide (PA-10.10).

Z : autre polyamide

Z désigne un autre polyamide et peut correspondre à un motif répétitif aliphatique ou un motif X.Y tel que défini ci-dessus, à condition d'être différent de A.

La proportion de Z présente est de 0 à 20% en poids par rapport à la somme A + Z.

S'agissant de (B) :

Les copolymères (B) à motifs amides et motifs polyéthers résultent de la copolycondensation de séquences polyamides à extrémités réactives avec des séquences polyéthers à extrémités réactives, telles que, entre autres :

> 1) Séquences polyamides à bouts de chaîne diamines avec des séquences polyoxyalkylènes à bouts de chaînes dicarboxyliques.
> 2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyalkylène éther diols (polyétherdiols).
> 3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

Motif amide (Ba1) :

Le motif amide (Ba1) correspond à un motif répétitif aliphatique tel que défini ci-dessus pour le motif répétitif A, à l'exclusion de la diamine dans le cas où A est un motif X.Y qui ne peut correspondre à une diamine cycloaliphatique.
Avantageusement, (Ba1) représente l'acide 11-aminoundécanoïque ou le undécanolactame.

Motif polyéther (Ba2) :

Les motifs polyéthers sont issus d'au moins un polyalkylène éther polyol, en particulier ils sont issus d'au moins un polyalkylène éther polyol, en d'autres termes, les motifs polyéthers sont constitués d'au moins un polyalkylène éther polyol. Dans ce mode de réalisation, l'expression « d'au moins un polyalkylène éther polyol » signifie que les motifs polyethers sont exclusivement constitués de bouts de chaîne alcool et ne peuvent donc être un composé de type triblock polyetherdiamine.
La composition de l'invention est donc dépourvue de triblock polyetherdiamine.
La masse moléculaire moyenne en nombre des blocs polyéthers est avantageusement comprise de 200 à 4000 g/mole, de préférence de 250 à 2500 g/mole, notamment de 300 et 1100 g/mole.
Le copolyamide (B) peut être préparé par le procédé suivant lequel :

- dans une première étape, on prépare les blocs polyamide (Ba1) par polycondensation

  o de la ou des diamines ;
  o du ou des diacides carboxyliques ; et

  le cas échéant, du ou des comonomères choisis parmi les lactames et les acides alpha-oméga aminocarboxyliques ;

  o en présence d'un limiteur de chaîne choisi parmi les diacides carboxyliques ; puis

- dans une seconde étape, on fait réagir les blocs polyamide (Ba1) obtenus avec des blocs polyéther (Ba2), en présence d'un catalyseur.

La méthode générale de préparation en deux étapes des copolymères de l'invention est connue et est décrite, par exemple, dans le brevet français FR 2 846 332 et dans le brevet européen EP 1 482 011.
La réaction de formation du bloc (Ba1) se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.
Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 15 mm Hg (2000 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.
On pourra également ajouter pendant la synthèse, au moment jugé le plus opportun, une ou plusieurs molécules utilisées comme anti-oxydant, par exemple l'Irganox® 1010 ou l'Irganox® 245.
On peut aussi considérer le procédé de préparation du copolyamide (B) tel que l'on ajoute tous les monomères au début, soit en une seule étape, pour effectuer la polycondensation :

- de la ou des diamines ;

- du ou des diacides carboxyliques ; et
- le cas échéant, de l'autre ou des autres comonomères de polyamide ;
- en présence d'un limiteur de chaîne choisi parmi les diacides carboxyliques ;
- en présence des blocs (Ba2) (polyéther) ;
- en présence d'un catalyseur pour la réaction entre les blocs souples (Ba2) et les blocs (Ba1).

Avantageusement, on utilise comme limiteur de chaîne ledit diacide carboxylique, que l'on introduit en excès par rapport à la stoechiométrie de la ou des diamines.

Avantageusement, on utilise comme catalyseur, un dérivé d'un métal choisi dans le groupe formé par le titane, le zirconium et l'hafnium ou un acide fort tel que l'acide phosphorique, l'acide hypophosphoreux ou l'acide borique.

On peut conduire la polycondensation à une température de 240 à 280°C.

D'une manière générale les copolymères à motifs éthers et amides connus sont constitués de séquences polyamides aliphatiques linéaires et semi-cristallines (par exemple les « Pebax » d'Arkema).

Le mélange (A) + (B) présente un module de flexion compris de 600 à moins de 1000 MPa, en particulier de 750 à moins de 1000, déterminé selon la norme ISO 178 :2010, ce qui confère à la composition de l'invention un bon compromis souplesse-rigidité.

Avantageusement, (B) présente également une dureté Shore D comprise de 35 à 55, en particulier de 37 à 47, mesurée selon ISO 868 :2003.

Cette dureté Shore D correspond à une dureté instannée.

S'agissant de (C) :

La composition de l'invention peut comprendre de 0 à 20% de fibres et/ou charges.

A titre d'exemple, les fibres peuvent être choisies parmi les fibres aramides, les fibres de verre, les fibres de carbone, avantageusement les fibres de verre ou les fibres de carbone.

A titre d'exemple, les charges peuvent être choisies parmi la silice, le graphite, le graphite expansé, le noir de carbone, les billes de verre, le kaolin, la magnésie, les scories, le talc, la wollastonite, les nanocharges (nanotubes de carbone), les pigments, les oxydes métalliques (oxyde de titane), les métaux, avantageusement la wollastonite et le talc, préférentiellement le talc.

S'agissant de (D) :

La composition de l'invention peut comprendre de 0 à 20% d'un modifiant choc qui à titre d'exemple est choisi parmi les polyoléfines fonctionnalisées ou non. Avantageusement, la polyoléfine est un copolymère élastomère de l'éthylène et d'une polyoléfine ou un copolymère élastomère de l'éthylène et de propylène fonctionnalisée ou non.

Le copolymère élastomère de l'éthylène et de polyoléfine peut comprendre de 5 à 45% en poids, avantageusement de 15 à 40% en poids, avantageusement de 25-35% en poids de copolymère d'une ou plusieurs oléfines en C4 à C10 (par exemple le butène-1 ou 2, le pentène, l'héxène-1 ou 2, l'heptène-1 ou 2 et l'octène-1 ou 2, le reste (complément à 100% en poids) correspondant au copolymère d'éthylène. Avantageusement, le copolymère élastomère de l'éthylène et de polyoléfine est choisi parmi un copolymère éthylène/butylène et un copolymère éthylène/octène greffé anhydride maléique.

Le copolymère élastomère de l'éthylène et de polypropylène peut comprendre de 22 à 60% en poids, avantageusement de 22 à 55% en poids, avantageusement de 25-55% en poids de copolymère de propylène, le reste (complément à 100% en poids) correspondant au copolymère d'éthylène. Ledit copolymère élastomère de l'éthylène et de polypropylène peut comprendre de plus au moins un copolymère diènes non conjugués en C5 à C10, tel que par exemple, le pentadiène 1,4 ; l'hexadiène 1,4 et 1,5 ; l'heptadiène 1,4 et 1,5 ; l'octadiène 1,4 et 1,5.

Avantageusement, ledit copolymère est un copolymère éthylène/propylène (EPR), ou un ethylène-propylène-diène monomère (EPDM) qui peuvent être greffés par de l'anhydride maléique.

Avantageusement, la composition de l'invention est dépourvue de modifiant choc.

S'agissant de (E) :

La composition de l'invention peut comprendre un additif choisi parmi les stabilisants, les colorants, à l'exception d'un colorant photochromique, les plastifiants.

A titre d'exemple, le stabilisant peut être un stabilisant UV, un stabilisant organique ou plus généralement une combinaison de stabilisants organiques, tel un antioxydant de type phénol (par exemple du type de celle de l'irganox 245 ou 1098 ou 1010 de la société Ciba-BASF), un antioxydant de type phosphite (par exemple l'irgaphos® 126 de la société Ciba-BASF) et voire éventuellement d'autres stabilisants comme un HALS, ce qui signifie Hindered Amine Light Stabiliser ou stabilisant lumière de type amine encombrée (par exemple le Tinuvin 770 de la société Ciba-BASF), un anti-UV (par exemple le Tinuvin 312 de la société Ciba), un stabilisant à base de phosphore. On peut également utiliser des antioxydants de type amine tel le Naugard 445 de la société Crompton ou encore des stabilisants polyfonctionnels tel le Nylostab S-EED de la société Clariant.

Ce stabilisant peut également être un stabilisant minéral, tel qu'un stabilisant à base de cuivre. A titre d'exemple de tels stabilisants minéraux, on peut citer les halogénures et les acétates de cuivre. Accessoirement, on peut considérer éventuellement d'autres métaux tel l'argent, mais ceux-ci sont connus pour être moins efficaces. Ces composés à base de cuivre sont typiquement associés à des halogénures de métaux alcalins, en particulier le potassium.

Un colorant photochromique est un colorant qui est réversiblement excitable par les UV ou par des longueurs d'onde courtes dans le visible, c'est-à-dire un colorant qui peut être excité dans un état dans lequel son spectre d'absorption s'altère de telle manière que l'absorption de la lumière visible a lieu.

La composition de l'invention est dépourvue de colorant photochromique.

A titre d'exemple, les plastifiants sont choisis parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tel que l'oligoéthylèneoxy malonate.

On ne sortirait pas du cadre de l'invention en utilisant un mélange de plastifiants.

La composition décrite permet d'obtenir des pièces fines en moulage par injection qui présentent un compromis de propriétés rigidité / retour élastique/ résistance à la fatigue / résistance au choc/ injectabilité / aptitude à la décoration idéal pour la réalisation d'articles de sport, notamment la chaussure ski ou la chaussure rigide à crampons, en particulier pour le soccer ou le football américain.

Avantageusement, la composition telle que définie ci-dessus est substantiellement dépourvue de transparence.

L'expression « substantiellement dépourvue de transparence » signifie que la composition présente une transparence telle que la transmittance à 560 nm sur plaque de 2 mm d'épaisseur est inférieure à 70% déterminée selon la norme ISO 13468-2:2006.

Avantageusement, dans la composition de l'invention, le copolyamide (B) a une cristallinité telle que l'enthalpie de fusion lors de la deuxième chauffe d'une DSC ISO (delta Hm(2)) soit au moins égale à 25 J/g, la masse étant rapportée à la quantité de motifs amides contenus ou de polyamide contenu, cette fusion correspondant à celle des motifs amides.

L'enthalpie de fusion est déterminée selon la norme 11357-3 :2013. Avantageusement, dans la composition de l'invention, les motifs amides (Ba1) représentent au moins 50% en poids du copolyamide (B).

Avantageusement, dans la composition de l'invention, les motifs polyéthers (Ba2) représentent au moins 15% en poids du copolyamide (B).

On ne sortirait pas du cadre de l'invention si le copolyamide (B) comprenait de plus un autre polymère dans une proportion en poids de 0 à 20%.

A titre d'exemple, l'autre polymère peut être un polyester.

Avantageusement, lesdits motifs polyéthers (Ba2) sont choisis parmi le polyéthylène glycol (PEG), le polypropylène glycol (PPG), le polytriméthylène glycol (PO3G), le polytétraméthylène glycol (PTMG) et leurs mélanges ou leurs copolymères, en particulier le PTMG.

Avantageusement le polyamide (A) de la composition de l'invention est présent de 65 à 95% en poids, en particulier de 65 à 85% en poids, notamment de 75 à 85% en poids.

Avantageusement, le copolyamide (B) de la composition est présent de 5 à 35%, notamment de 5 à 30%, en particulier de 5 à 20%, en particulier de 5 à 15%.

Avantageusement le polyamide (A) de la composition de l'invention est présent de 65 à 95% en poids, en particulier de 65 à 85% en poids, notamment de 75 à 85% en poids et le copolyamide (B) de la composition est présent de 5 à 35%, notamment de 5 à 30%, en particulier de 5 à 20%, en particulier de 5 à 15%.

Selon une autre variante de l'invention, la composition de l'invention comprend:

(A) 50 à 95%,
(B) 5 à 50%,
(E) 0 à 5%,

la somme A + B + E étant égale à 100%.

Avantageusement, dans cette composition comprenant (A), (B) et optionnellement (E), le polyamide (A) de la composition de l'invention est présent de 65 à 95% en poids, en particulier de 65 à 85% en poids, notamment de 75 à 85% en poids.

Avantageusement, dans cette composition comprenant (A), (B) et optionnellement (E), le copolyamide (B) de la composition est présent de 5 à 35%, notamment de 5 à 30%, en particulier de 5 à 20%, en particulier de 5 à 15%.

Avantageusement dans cette composition comprenant (A), (B) et optionnellement (E), le polyamide (A) de la composition de l'invention est présent de 65 à 95% en poids, en particulier de 65 à 85% en poids, notamment de 75 à 85% en poids et le copolyamide (B) de la composition est présent de 5 à 35%, notamment de 5 à 30%, en particulier de 5 à 20%, en particulier de 5 à 15%.

Dans cette variante, la composition de l'invention est dépourvue de modifiant choc et de fibres et/ou charges et est donc constituée très majoritairement d'un mélange (A) + (B) qui présente un module de flexion compris de 600 à moins de 1000 MPa, en particulier de 750 à moins de 1000 (norme ISO 178 :2010), ce qui permet à cette composition de l'invention de présenter un compromis choc/processabilité/rigidité amélioré ainsi qu'une aptitude à la décoration adaptée à une utilisation pour un article de sport correspondant notamment à une chaussure de ski.

Avantageusement, le polyamide (A) et/ou le polyamide (Ba1) de cette composition dépourvue de modifiant choc et de fibres et/ou charges est choisi parmi le PA11 et le PA 12, en particulier le PA 11. Avantageusement le polyamide (A) et/ou le polyamide (Ba1) est d'origine bioressourcée, c'est-à-dire qu'il peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être notamment l'acide 11-aminoundécanoïque, les diamines et diacides aliphatiques et linéaires tels que définis ci-dessus. Avantageusement, le pourcentage de monomères provenant de ressources issues de matières premières renouvelables est d'au moins 90%.

Selon une autre variante de l'invention, la composition de l'invention comprend:

(A) 50 à 95%,
(B) 5 à 50%,
(D) 0,1 à 10%,
(E) 0 à 5%,

la somme A + B + D + E étant égale à 100%.

Avantageusement, dans cette composition comprenant (A), (B), (D) et optionnellement (E), le polyamide (A) de la composition de l'invention est présent de 65 à 95% en poids, en particulier de 65 à 85% en poids, notamment de 75 à 85% en poids.

Avantageusement, dans cette composition comprenant (A), (B), (D) et optionnellement (E), le copolyamide (B) de la composition est présent de 5 à 35%, notamment de 5 à 30%, en particulier de 5 à 20%, en particulier de 5 à 15%.

Avantageusement dans cette composition comprenant (A), (B), (D) et optionnellement (E), le polyamide (A) de la composition de l'invention est présent de 65 à 95% en poids, en particulier de 65 à 85% en poids, notamment de 75 à 85% en poids et le copolyamide (B) de la composition est présent de 5 à 35%, notamment de 5 à 30%, en particulier de 5 à 20%, en particulier de 5 à 15%.

Dans cette variante, la composition de l'invention est dépourvue de fibres et/ou charges et est donc constituée très majoritairement d'un mélange (A) + (B) qui comprend également des modifiants chocs ce qui permet à cette composition de l'invention de présenter une résistance au choc supérieure à la composition dépourvue de modifiant choc et de fibres et/ou charges, mais adaptée également à une utilisation pour un article de sport correspondant notamment à une chaussure de ski.

Avantageusement, le polyamide (A) et/ou le polyamide (Ba1) de cette composition dépourvue de modifiant choc et de fibres et/ou charges est choisi parmi le PA11 et le PA 12, en particulier le PA 11. Avantageusement le polyamide (A) et/ou le polyamide (Ba1) est d'origine bio ressourcée, c'est-à-dire qu'il peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être notamment l'acide 11-aminoundécanoïque, les diamines et diacides aliphatiques et linéaires tels que définis ci-dessus. Avantageusement, le pourcentage de monomères provenant de ressources issues de matières premières renouvelables est d'au moins 90%.

Selon une autre variante de l'invention, la composition de l'invention comprend:

(A) 50 à 95%,
(B) 5 à 50%,
(C) 2 à 10%, notamment 5 à 10%, en particulier de 2 à 7%,

(E) 0 à 5%,

la somme A + B + C + E étant égale à 100%.

Dans cette variante, la composition de l'invention est dépourvue de modifiant choc et est donc constituée très majoritairement d'un mélange (A) + (B) qui comprend des fibres et/ou charges et optionnellement des additifs.

Avantageusement, les fibres, sont notamment des fibres de verres ou de carbone ce qui permet à cette composition de l'invention de présenter un compromis choc/processabilité/rigidité amélioré par rapport à une composition comprenant un polyamide tel que le PA 11 et des fibres de verre ou de carbone mais dépourvu de PEBA et modifiant choc. Cette composition est alors adaptée à une utilisation pour un article de sport correspondant notamment à une chaussure plus rigide telle qu'une chaussure rigide à crampon, notamment pour le soccer ou le football américain.

Avantageusement, dans cette composition comprenant (A), (B), (C) et optionnellement (E), le polyamide (A) de la composition de l'invention est présent de 65 à 95% en poids, en particulier de 65 à 85% en poids, notamment de 75 à 85% en poids.

Avantageusement, dans cette composition comprenant (A), (B), (C) et optionnellement (E), le copolyamide (B) de la composition est présent de 5 à 35% en poids, notamment de 5 à 30%, en particulier de 5 à 20%, en particulier de 5 à 15%.

Avantageusement dans cette composition comprenant (A), (B), (C) et optionnellement (E), le polyamide (A) de la composition de l'invention est présent de 65 à 95% en poids, en particulier de 65 à 85% en poids, notamment de 75 à 85% en poids et le copolyamide (B) de la composition est présent de 5 à 35%, notamment de 5 à 30%, en particulier de 5 à 20%, en particulier de 5 à 15%.

Avantageusement, la composition de l'invention dépourvue de modifiant choc et comprenant des fibres telles que des fibres de verre ou de carbone présente un module de flexion compris de 1400 à 2100 MPa, en particulier de 1600 à 2100 MPa, tel que déterminé selon la norme ISO 178 :2010. Avantageusement, ladite composition comprend de 5 à 10% en poids de fibres de verre ou de 2 à 7% en poids de fibres de carbone.

Avantageusement, le polyamide (A) et/ou le polyamide (Ba1) de cette composition dépourvue de modifiant choc et comprenant des fibres telles que des fibres de verre ou de carbone est choisi parmi le PA11 et le PA 12, en particulier le PA 11. Avantageusement le polyamide (A) et/ou le polyamide (Ba1) est d'origine bio ressourcée, c'est-à-dire qu'il peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être notamment l'acide 11-aminoundécanoïque, les diamines et diacides aliphatiques et linéaires tels que définis ci-dessus. Avantageusement, le pourcentage de monomères provenant de ressources issues de matières premières renouvelables est d'au moins 90%. Alternativement, lesdits additifs de cette composition dépourvue de modifiant choc peuvent être des charges, notamment la wollastonite et/ou le talc ce qui permet à cette composition de l'invention de présenter des propriétés de matériau ductile à -10°C qui est alors adaptée à une utilisation pour un article de sport correspondant notamment à une chaussure plus rigide telle qu'une chaussure rigide à crampon, notamment pour le soccer ou le football américain. Avantageusement, ladite composition de l'invention dépourvue de modifiant choc et comprenant des charges telles que de la wollastonite et/ou du talc présente un module de flexion compris de 1400 à 2100 MPa, en particulier de 1600 à 2100 MPa, tel que déterminé selon la norme ISO 178 :2010.

Avantageusement, le polyamide (A) de cette composition dépourvue de modifiant choc et comprenant des charges est choisi PA-4.6; PA-6.6; PA-6.9; le PA-6.10; le PA-6.12; PA-10.12; PA-10.10 et PA-12.12, avantageusement PA-10.10 et/ou le polyamide (Ba1) est choisi parmi le PA11 et le PA 12, en particulier le PA 11. Avantageusement le polyamide (A) et/ou le polyamide (Ba1) est d'origine bio ressourcée, c'est-à-dire qu'il peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être notamment l'acide 11-aminoundécanoïque, les diamines et diacides aliphatiques et linéaires tels que définis ci-dessus. Avantageusement, le pourcentage de monomères provenant de ressources issues de matières premières renouvelables est d'au moins 90%. Selon un autre aspect, la présente invention concerne l'utilisation d'une composition telle que définie ci-dessus, pour la fabrication d'un article de sport, notamment d'une chaussure de ski ou d'une chaussure rigide à crampon, telle qu'une chaussure de soccer ou de football américain.

Selon encore un autre aspect, la présente invention concerne un procédé de préparation d'une composition telle que définie ci-dessus, comprenant une étape de mélange des constituants (A), (B) et le cas échéant (C) à (E) à l'état fondu, en particulier dans une extrudeuse, à une température comprise entre 230 et 330°C, et on les récupère sous forme de granulés, granulés qui seront par la suite injectés à une température comprise entre 230 et 330°C, sur une presse à injection pour obtenir les articles désirés.

Selon encore un autre aspect, la présente invention concerne un procédé de préparation d'une composition telle que définie ci-dessus, comprenant une étape de mélange des constituants (A), (B) et le cas échéant des constituants (C) à (E), qui sont sous forme de granulés, ce mélange étant ensuite injecté à une température comprise entre 230 et 330°C sur une presse à injection pour obtenir les articles désirés.

L'invention concerne également un article façonné, tel que fibre, tissu, film, feuille, jonc, tube pièce injectée, notamment substantiellement dépourvu de transparence, comprenant la composition telle que définie ci-dessus, lequel peut être réalisé sous la forme d'un mélange à sec ou après un compoundage sur extrudeuse.

Avantageusement, l'article défini ci-dessus, consiste en un article de sport, notamment chaussure de ski ou une partie de chaussure de ski ou chaussure rigide à crampon, telle que chaussure de soccer ou de football américain.

Exemples :

**Exemple 1 : Mélanges PA/PEBA**

Composition de l'invention :

(A)PA11 : 84,7% (bio ressourcé)

(B) PA 11/PTMG 1000 (50/ 50) : 15% (bio ressourcé)

Additifs : antioxydants Irganox® 245 et Irgafos®126.

Le tableau 1 présente les valeurs obtenues sur 6 critères principaux nécessaires pour la fabrication d'article de sport.

Tableau 1

| type | nom ou composition | Invention1 | Comp C1 | Comp C2 | Comp C3 | Comp C4 |
|---|---|---|---|---|---|---|
| PA11 | | 84,7 | | | | |
| Pebax | 95,2% PA12(5000) + 4,8% PTMG (250) | | 100 | | | |
| Pebax | 95,7% PA11 (5600) + 4,3% PTMG (250) | | | 100 | | |
| PA12 | | | | | | |
| Pebax | 50% PA11 (1000) + 50% PTMG (1000) | 15 | | | | |
| stabilisant | Irgafos® 126 | 0,2 | | | | |
| stabilisant | Irganox® 245 | 0,1 | | | | |
| module de flexion | ISO 178 :2010 | 850 | *513* | *560* | 710 | 710 |
| Ross Flex | 150 000 cycles | pas de casse | pas de casse | pas de casse | pas de casse | pas de casse |
| choc multiaxial 23°C | ISO 6603-2 | ductile | ductile | ductile | ductile | ductile |
| choc Charpy entaillé (-30°C) | ISO 179-1 :2010 | 16 | 10 | 16 | 75 | 40 |
| longueur d'écoulement | (900b, 260°C, 2mm) | 420 mm | | | | *175 mm* |
| esthétique / coloration | | bon | bon | bon | *moyen* | *moyen* |
| % matière renouvelable | | >90% | 0% | >90% | 0% | 0% |

Les différents PEBAX sont commercialisés par la société Arkema. Le chiffre entre parenthèses indique le poids moléculaire moyen du polyamide et du polyéther.

L'irgaphos® 126 est un antioxydant à base de phosphite commercialisé par Ciba-BASF.

L'irganox® 245 est un antioxydant de type phénol.

Comp C1 = Composition comparative C1 : PA12 (non bio ressourcé)

Comp C2 = Composition comparative C2 : PA11 (bio ressourcé)

Comp C3 = Composition comparative C3: Grilamid L25ANZ® (PA12 non bioressourcé) commercialisé par la société EMS. Elle correspond à un mélange PA12 et polyoléfines et est habituellement utilisée par la fabrication de chaussures de ski. L'introduction de polyoléfines en tant que modifiant choc confère à la composition un aspect mat, plus visqueux et difficile à colorer.

Comp C4 = Composition comparative C4 : Grilamid XE4158® (PA12 non bio ressourcé) commercialisé par la société EMS. Elle présente la caractéristique d'être plus fluide que la composition C3.

Les valeurs en italiques indiquent des propriétés insuffisantes pour la fabrication d'articles de sport.

Les compositions C1 à C4 présentent soit un module trop faible, soit un choc charpy trop bas ou une valeur de longueur d'écoulement trop basse pour la fabrication de tels articles.

Seule la composition de l'invention présente de bonnes valeurs sur les 6 critères retenus. L'introduction de PEBA va contrebalancer les désavantages des polyoléfines en permettant de fluidifier la composition et de la rendre plus aisée à colorer.

Par ailleurs, la composition de l'invention 1 présente également un caractère ductile en choc multiaxial à -20°C.

**Exemple 2 : Mélanges PA/PEBA et additifs**

Les propriétés de compositions de l'invention : PA 10.10 ou PA11 en présence d'additifs tels que fibres ou charges en comparaison avec des compositions comparatives sont présentées dans le tableau 2 :

Tableau 2

| type | Nom ou composition | Invention1 | Invention2 | Invention3 | comp C1 | comp C2 | comp C3 | comp C4 | comp C5 |
|---|---|---|---|---|---|---|---|---|---|
| PA10,10 | | 84,3 | 84,3 | | 93,7 | 92 | 93,7 | 91,7 | |
| PA11 | | | | 77,9 | | | | | 91,7 |
| Talc | Jetfine 3CA | 7,4 | | | 6 | 8 | | | |
| Pebax | PA11/PTMG 1000/1000 (50/50) | 8 | 8 | 15 | | | | | |
| Fibre de verre | Asahi CSX 3J451S | | | 6,8 | | | | | 8 |
| wollastonite | Nyglos 8 | | 7,4 | | | | 6 | 8 | |
| wollastonite | Tremin 939 | | | | | | | | |
| stabilisant | NaHPO2 | 0,2 | 0,2 | 0,2 | 0,2 | 0,2 | 0,2 | 0,2 | 0,2 |
| stabilisant | Irganox 245 | 0,1 | 0,1 | 0,1 | 0,1 | 0,1 | 0,1 | 0,1 | 0,1 |
| | | | | | | | | | |
| module de flexion | ISO 178 :2010 | 1747 | 1607 | 1464 | 1873 | 2073 | 1784 | 1941 | 1908 |
| Ross Flex | 150 000 cycles | pas de casse | pas de casse | pas de casse | *60% casse* | *60% casse* | *60% casse* | *100% casse* | pas de casse |
| choc multiaxial 23°C | ISO 6603-2 | ductile | ductile | ductile | ductile | ductile | ductile | ductile | *fragile* |
| longueur d'éc coulement | | 434 | 488 | 329 | 366 | 389 | 490 | 474 | 398 |

EP 3 126 447 B1

Les PA 10.10 et PA11 sont commercialisés par la société Arkema.

Jetfine 3CA est commercialisé par la société Imerys.

Asahi CSX 3J451S est commercialisé par la société Asahi Kasei incorporation. Nyglos 8® est commercialisé par la société Nyco Minerais Incorporation. Tremin® 939 est commercialisé par la société Quartzwerke.

Les valeurs en italiques indiquent des propriétés insuffisantes pour la fabrication d'articles de sport.

Les compositions de l'invention 1 et 2 présentent des caractéristiques supérieures (notamment en terme de Rossflex et de choc multiaxial à 23°C, avec des additifs telles que des charges (talc et wollastonite respectivement) comparées à la composition de l'invention 3 constituée de PA 11, PEBA et fibres de verre qui elle-même présente des caractéristiques supérieures comparées à la composition comparative C5 constituée de PA 11 et fibres de verre (sans PEBA).

Par ailleurs, la composition de l'invention 1 présente également un caractère ductile en choc multiaxial à -10°C.

**Revendications**

1. Composition comprenant, en poids, le total étant égal à 100 % :

    (A) 50 à 95% d'au moins un polyamide semi-cristallin de formule A/Z dans laquelle,

        - A est un motif répétitif aliphatique choisi parmi un motif obtenu à partir de la polycondensation d'au moins un aminoacide et un motif obtenu à partir de la polycondensation d'au moins un lactame ou un motif X.Y obtenu à partir de la polycondensation :

            - d'au moins une diamine, ladite diamine étant choisie parmi une diamine aliphatique linéaire ou ramifiée, une diamine cycloaliphatique et une diamine aromatique ou un mélange de ceux-ci, et
            - d'au moins un diacide carboxylique, ledit diacide état choisi parmi :

                un diacide aliphatique, un diacide cycloaliphatique et un diacide aromatique,
                ladite diamine et ledit diacide comprenant de 4 à 36 atomes de carbone, avantageusement de 6 à 18 atomes de carbone, et

        - Z représente un autre polyamide et est compris de 0 à 20% ;

    (B) 5 à 50% d'au moins d'un copolyamide semi-cristallin à motifs amides (Ba1) et à motifs polyéthers (Ba2), ayant une température de transition vitreuse (Tg) inférieure à 75°C,
    ledit motif amide (Ba1) correspondant à un motif répétitif aliphatique choisi parmi un motif obtenu à partir d'au moins un aminoacide et un motif obtenu à partir d'au moins un lactame, ou un motif X.Y obtenu à partir de la polycondensation :

        - d'au moins une diamine, ladite diamine étant choisie parmi une diamine aliphatique linéaire ou ramifiée et une diamine aromatique ou un mélange de ceux-ci, et
        - d'au moins un diacide carboxylique, ledit diacide étant choisi parmi :

            un diacide aliphatique et un diacide aromatique,
            ladite diamine et ledit diacide comprenant de 4 à 36 atomes de carbone, avantageusement de 6 à 18 atomes de carbone ;

    lesdits motifs polyéthers (Ba2) étant issus d'au moins un polyalkylène éther polyol, notamment un polyalkylène éther diol,
    le mélange (A) + (B) présentant un module de flexion compris de 600 à moins de 1000 MPa, en particulier de 750 à moins de 1000, tel que déterminé selon la norme ISO 178 :2010 ;
    (C) 0 à 20% en poids de fibres et/ou charges,
    (D) 0 à 20% d'au moins un modifiant choc,
    (E) 0 à 5% d'au moins un additif choisi parmi les stabilisants, les colorants, à l'exception d'un colorant photochromique, les plastifiants ou un mélange de ceux-ci, pour la fabrication d'un article de sport.

2. Composition selon la revendication 1, **caractérisée en ce que** ladite composition présente une transparence telle que la transmittance à 560 nm sur plaque de 2 mm d'épaisseur est inférieure à 70% déterminée selon la norme ISO 13468-2:2006.

3. Composition selon l'une des revendications 1 ou 2, **caractérisée en ce que** le copolyamide (B) a une cristallinité telle que l'enthalpie de fusion lors de la deuxième chauffe d'une DSC ISO (delta Hm(2)) soit au moins égale à 25 J/g, la masse étant rapportée à la quantité de motifs amides contenus ou de polyamide contenu, cette fusion correspondant à celle des motifs amides.

4. Composition selon l'une des revendications 1 à 3, **caractérisée en ce que** les motifs amides (Ba1) représentent au moins 50% en poids du copolyamide (B).

5. Composition selon l'une des revendications 1 à 4, **caractérisée en ce que** les motifs polyéthers (Ba2) représentent au moins 15% en poids du copolyamide (B).

6. Composition selon l'une des revendications 1 à 5, **caractérisée en ce que** les motifs polyéthers (Ba2) sont choisis parmi le polyéthylène glycol (PEG), le polypropylène glycol (PPG), le polytriméthylène glycol (PO3G), le polytétraméthylène glycol (PTMG) et leurs mélanges ou leurs copolymères, en particulier le PTMG.

7. Composition selon l'une des revendications 1 à 6, dans laquelle le copolyamide (A) est présent de 65 à 95%, en particulier de 65 à 85%.

8. Composition selon l'une des revendications 1 à 7, dans laquelle le copolyamide (B) est présent de 5 à 35%, notamment de 5 à 30%, en particulier de 5 à 20%.

9. Composition selon l'une des revendications 1 à 8, comprenant:

(A) 50 à 95%,
(B) 5 à 50%,
(E) 0 à 5%,

la somme A + B + E étant égale à 100%.

10. Composition selon l'une des revendications 1 à 8, comprenant:

(A) 50 à 95%,
(B) 5 à 50%,
(D) 0,1 à 10%,
(E) 0 à 5%,

la somme A + B + C + E étant égale à 100%.

11. Composition selon l'une des revendications 1 à 8, comprenant:

(A) 50 à 95%,
(B) 5 à 50%,
(C) 2 à 10%, notamment 5 à 10%, en particulier 2 à 7%
(E) 0 à 5%,

la somme A + B + C + E étant égale à 100%.

12. Composition selon la revendication 11, comprenant des fibres (C), en particulier des fibres de verre ou des fibres de carbone.

13. Composition selon l'une des revendications 1 à 12, **caractérisée en ce que** le polyamide (A) et/ou le polyamide (Ba1) est choisi parmi le PA11 et le PA 12, en particulier le PA 11.

**14.** Composition selon la revendication 13, **caractérisée en ce que** le polyamide (A) et/ou le polyamide (Ba1) est(sont) bio ressourcé(s).

**15.** Composition selon la revendication 11, comprenant des charges (C), en particulier choisies parmi la wollastonite et le talc.

**16.** Composition selon la revendication 15, **caractérisée en ce que** le polyamide (A) est choisi parmi PA-4.6; PA-6.6; PA-6.9; le PA-6.10; le PA-6.12; PA-10.12; PA-10.10 et PA-12.12, avantageusement PA-10.10 et/ou le polyamide Ba1 est choisi parmi le PA11 et le PA 12, en particulier le PA 11.

**17.** Composition selon l'une des revendications 11 à 16, **caractérisée en ce qu'**elle présente un module de flexion compris de 1400 à 2100 MPa, en particulier de 1600 à 2100 MPa, tel que déterminé selon la norme ISO 178 :2010.

**18.** Utilisation d'une composition telle que définie dans l'une des revendications 1 à 17, pour la fabrication d'un article de sport, notamment d'une chaussure de ski ou d'une chaussure rigide à crampon, telle qu'une chaussure de soccer ou de football américain.

**19.** Utilisation d'une composition selon la revendication 18, dans laquelle ladite composition est telle que définie dans les revendications 9 ou 10 dans laquelle l'article de sport est une chaussure de ski ou une partie de chaussure de ski.

**20.** Utilisation d'une composition selon la revendication 18, dans laquelle ladite composition est telle que définie dans les revendications 11 ou 12 et dans laquelle l'article de sport est une chaussure rigide à crampon, telle qu'une chaussure de soccer, de football américain.

**21.** Procédé de préparation d'une composition telle que définie à l'une des revendications 1 à 17, comprenant une étape de mélange des constituants (A), (B) et le cas échéant (C) à (E) à l'état fondu, en particulier dans une extrudeuse, à une température comprise entre 230 et 330°C, et on les récupère sous forme de granulés, granulés qui seront par la suite injectés à une température comprise entre 230 et 330°C, sur une presse à injection pour obtenir les articles désirés.

**22.** Procédé de préparation d'une composition telle que définie à l'une des revendications 1 à 17, comprenant une étape de mélange des constituants (A), (B) et le cas échéant des constituants (C) à (E), qui sont sous forme de granulés, ce mélange étant ensuite injecté à une température comprise entre 230 et 330°C sur une presse à injection pour obtenir les articles désirés.

**23.** Article façonné, tel que fibre, tissu, film, feuille, jonc, tube pièce injectée, notamment substantiellement dépourvu de transparence, comprenant la composition telle que définie à l'une des revendications 1 à 17, lequel peut être réalisé sous la forme d'un mélange à sec ou après un compoundage sur extrudeuse.

**24.** Article selon la revendication 23, **caractérisé par le fait qu'**il consiste en un article de sport, notamment chaussure de ski ou chaussure rigide à crampon, telle que chaussure de soccer ou de football américain.

**Patentansprüche**

**1.** Zusammensetzung, die auf das Gewicht bezogen Folgendes umfasst, wobei die Summe gleich 100 % ist:

(A) 50 bis 95 % mindestens eines teilkristallinen Polyamids der Formel A/Z, in der

- A eine aliphatische Wiederholungseinheit ist, die aus einer aus der Polykondensation von mindestens einer Aminosäure erhaltenen Einheit und einer aus der Polykondensation von mindestens einem Lactam erhaltenen Einheit oder einer aus der Polykondensation von:

- mindestens einem Diamin, wobei das Diamin aus einem linearen oder verzweigten aliphatischen Diamin, einem cycloaliphatischen Diamin und einem aromatischen Diamin oder einer Mischung davon und
- mindestens einer Dicarbonsäure, wobei die Dicarbonsäure aus:

einer aliphatischen Disäure, einer cycloaliphatischen Disäure und einer aromatischen Disäure ausgewählt ist,

wobei das Diamin und die Disäure 4 bis 36 Kohlenstoffatome, vorteilhafterweise 6 bis 18 Kohlenstoffatome, umfassen,

erhaltenen Einheit X.Y ausgewählt ist, und

- Z für ein anderes Polyamid steht und in einer Menge von 0 bis 20 % enthalten ist;

(B) 5 bis 50 % mindestens eines teilkristallinen Copolyamids, das Amid-Einheiten (Ba1) und Polyether-Einheiten (Ba2) umfasst, mit einer Glasübergangstemperatur ($T_g$) von weniger als 75 °C, wobei die Amid-Einheit (Ba1) einer aliphatischen Wiederholungseinheit entspricht, die aus einer aus mindestens einer Aminosäure erhaltenen Einheit und einer mindestens einem Lactam erhaltenen Einheit oder einer aus der Polykondensation von:

- mindestens einem Diamin, wobei das Diamin aus einem linearen oder verzweigten aliphatischen Diamin und einem aromatischen Diamin oder einer Mischung davon und
- mindestens einer Dicarbonsäure, wobei die Dicarbonsäure aus:

einer aliphatischen Disäure und einer aromatischen Disäure ausgewählt ist,

wobei das Diamin und die Disäure 4 bis 36 Kohlenstoffatome, vorteilhafterweise 6 bis 18 Kohlenstoffatome, umfassen,

erhaltenen Einheit X.Y ausgewählt ist;

wobei die Polyether-Einheiten (Ba2) von mindestens einem Polyalkylenetherpolyol, insbesondere einem Polyalkylenetherdiol, abstammen,

wobei die Mischung (A) + (B) einen Biegemodul von 600 bis weniger als 1000 MPa, speziell von 750 bis weniger als 1000, gemäß Bestimmung nach der ISO-Norm 178:2010 aufweist;

(C) 0 bis 20 Gew.-% Fasern und/oder Füllstoffe,

(D) 0 bis 20 Gew.-% mindestens eines Schlagzähigkeitsmodifikators,

(E) 0 bis 5 % mindestens eines Additivs, das aus Stabilisatoren, Farbmitteln mit Ausnahme eines photochromen Farbmittels, Weichmachern oder einer Mischung davon ausgewählt ist,

zur Herstellung eines Sportartikels.

2. Zusammensetzung nach Anspruch 1, **dadurch gekennzeichnet, dass** die Zusammensetzung eine solche Transparenz aufweist, dass die gemäß der ISO-Norm 13468-2:2006 bestimmte Durchlässigkeit bei 560 nm einer Platte mit einer Dicke von 2 mm weniger als 70 % beträgt.

3. Zusammensetzung nach Anspruch 1 oder 2, **dadurch gekennzeichnet, dass** das Copolyamid (B) eine solche Kristallinität aufweist, dass die Schmelzenthalpie beim zweiten Erhitzen bei einer ISO-DSC (delta Hm(2)) mindestens gleich 25 J/g ist, wobei sich das Gewicht auf die Menge von enthaltenen Amid-Einheiten oder enthaltenem Polyamid bezieht, wobei dieses Schmelzen dem Schmelzen der Amid-Einheiten entspricht.

4. Zusammensetzung nach einem der Ansprüche 1 bis 3, **dadurch gekennzeichnet, dass** die Amid-Einheiten (Ba1) mindestens 50 Gew.-% des Copolyamids (B) ausmachen.

5. Zusammensetzung nach einem der Ansprüche 1 bis 4, **dadurch gekennzeichnet, dass** die Polyether-Einheiten (Ba2) mindestens 15 Gew.-% des Copolyamids (B) ausmachen.

6. Zusammensetzung nach einem der Ansprüche 1 bis 5, **dadurch gekennzeichnet, dass** die Polyether-Einheiten (Ba2) aus Polyethylenglykol (PEG), Polypropylenglykol (PPG), Polytrimethylenglykol (PO3G), Polytetramethylenglykol (PTMG) und Mischungen davon oder Copolymeren davon, speziell PTMG, ausgewählt sind.

7. Zusammensetzung nach einem der Ansprüche 1 bis 6, wobei das Copolyamid (A) in einer Menge von 65 bis 95 %, speziell von 65 bis 85 %, vorliegt.

8. Zusammensetzung nach einem der Ansprüche 1 bis 7, wobei das Copolyamid (B) in einer Menge von 5 bis 35 %, insbesondere von 5 bis 30 %, speziell von 5 bis 20 %, vorliegt.

9. Zusammensetzung nach einem der Ansprüche 1 bis 8, umfassend:

   (A) 50 bis 95 %,
   (B) 5 bis 50 %,
   (E) 0 bis 5 %,

   ```
   wobei die Summe A + B + E gleich 100 % ist.
   ```

10. Zusammensetzung nach einem der Ansprüche 1 bis 8, umfassend:

    (A) 50 bis 95 %,
    (B) 5 bis 50 %,
    (D) 0,1 bis 10 %,
    (E) 0 bis 5 %,

    ```
    wobei die Summe A + B + C + E gleich 100 % ist.
    ```

11. Zusammensetzung nach einem der Ansprüche 1 bis 8, umfassend:

    (A) 50 bis 95 %,
    (B) 5 bis 50 %,
    (C) 2 bis 10 %, insbesondere 5 bis 10 %, speziell 2 bis 7 %,
    (E) 0 bis 5 %,

    ```
    wobei die Summe A + B + C + E gleich 100 % ist.
    ```

12. Zusammensetzung nach Anspruch 11, umfassend Fasern (C), insbesondere Glasfasern oder Kohlefasern.

13. Zusammensetzung nach einem der Ansprüche 1 bis 12, **dadurch gekennzeichnet, dass** das Polyamid (A) und/oder das Polyamid (Ba1) aus PA11 und PA12, speziell PA11, ausgewählt ist.

14. Zusammensetzung nach Anspruch 13, **dadurch gekennzeichnet, dass** das Polyamid (A) und/oder das Polyamid (Ba1) aus biologischen Quellen stammt bzw. stammen.

15. Zusammensetzung nach Anspruch 11, umfassend Füllstoffe (C), die speziell aus Wollastonit und Talk ausgewählt sind.

16. Zusammensetzung nach Anspruch 15, **dadurch gekennzeichnet, dass** das Polyamid (A) aus PA-4.6; PA-6.6; PA-6.9; PA-6.10; PA-6.12; PA-10.12; PA-10.10 und PA-12.12, vorteilhafterweise PA-10.10, ausgewählt ist und/oder das Polyamid Ba1 aus PA11 und PA12, speziell PA11, ausgewählt ist.

17. Zusammensetzung nach einem der Ansprüche 11 bis 16, **dadurch gekennzeichnet, dass** sie einen Biegemodul von 1400 bis 2100 MPa, speziell von 1600 bis 2100 MPa, gemäß Bestimmung nach der ISO-Norm 178:2010 aufweist.

18. Verwendung einer Zusammensetzung gemäß einem der Ansprüche 1 bis 17 zur Herstellung eines Sportartikels, insbesondere eines Skischuhs oder eines festen Stollenschuhs, wie eines Fußball- oder Footballschuhs.

19. Verwendung einer Zusammensetzung nach Anspruch 18, wobei die Zusammensetzung wie in Anspruch 9 oder 10 definiert ist, wobei es sich bei dem Sportartikel um einen Skischuh oder einen Skischuhteil handelt.

20. Verwendung einer Zusammensetzung nach Anspruch 18, wobei die Zusammensetzung wie in Anspruch 11 oder 12 definiert ist, wobei es sich bei dem Sportartikel um einen festen Stollenschuh, wie einen Fußball- oder Footballschuh, handelt.

21. Verfahren zur Herstellung einer Zusammensetzung gemäß einem der Ansprüche 1 bis 17, umfassend einen Schritt des Mischens der Bestandteile (A), (B) und gegebenenfalls (C) bis (E) in schmelzflüssigem Zustand, speziell in einem Extruder, bei einer Temperatur zwischen 230 und 330 °C und deren Gewinnung in Form von Granulat, wobei das Granulat anschließend bei einer Temperatur zwischen 230 und 330 °C auf einer Spritzgussmaschine gespritzt wird, was die gewünschten Artikel ergibt.

22. Verfahren zur Herstellung einer Zusammensetzung nach einem der Ansprüche 1 bis 17, umfassend einen Schritt des Mischens der Bestandteile (A), (B) und gegebenenfalls (C) bis (E), die in Form von Granulat vorliegen, wobei diese Mischung anschließend bei einer Temperatur zwischen 230 und 330 °C auf einer Spritzgussmaschine gespritzt wird, was die gewünschten Artikel ergibt.

23. Formkörper, wie Faser, Gewebe, Film, Folie, Stab, Rohr oder Spritzgussteil, der im Wesentlichen keine Transparenz aufweist, umfassend die Zusammensetzung gemäß einem der Ansprüche 1 bis 17, die in Form einer Trockenmischung oder nach Compoundieren in einem Extruder hergestellt werden kann.

24. Artikel nach Anspruch 23, **dadurch gekennzeichnet, dass** sie aus einem Sportartikel, insbesondere einem Skischuh oder einem festen Stollenschuh, wie einem Fußball- oder Footballschuh, besteht.

## Claims

1. Composition comprising, by weight, the total being equal to 100%:

   (A) 50% to 5% of at least one semicrystalline polyamide of formula A/Z in which:

   - A is an aliphatic repeating unit chosen from a unit obtained from the polycondensation of at least one amino acid and a unit obtained from the polycondensation of at least one lactam or a unit X.Y obtained from the polycondensation:

     - of at least one diamine, said diamine being chosen from a linear or branched aliphatic diamine, a cycloaliphatic diamine and an aromatic diamine, or a mixture thereof, and
     - of at least one dicarboxylic acid, said diacid being chosen from:

       an aliphatic diacid, a cycloaliphatic diacid and an aromatic diacid, said diamine and said diacid comprising from 4 to 36 carbon atoms, advantageously from 6 to 18 carbon atoms, and

   - Z represents another polyamide and is included from 0 to 20%;

   (B) 5% to 50% of at least one semicrystalline copolyamide comprising amide units (Ba1) and comprising polyether units (Ba2), having a glass transition temperature ($T_g$) below 75°C,
   said amide unit (Ba1) corresponding to an aliphatic repeating unit chosen from a unit obtained from at least one amino acid and a unit obtained from at least one lactam, or a unit X.Y obtained from the polycondensation:

     - of at least one diamine, said diamine being chosen from a linear or branched aliphatic diamine and an aromatic diamine, or a mixture thereof, and
     - of at least one dicarboxylic acid, said diacid being chosen from:

       an aliphatic diacid and an aromatic diacid, said diamine and said diacid comprising from 4 to 36 carbon atoms, advantageously from 6 to 18 carbon atoms;

   said polyether units (Ba2) resulting in particular from at least one polyalkylene ether polyol, in particular one polyalkylene ether diol,
   the blend (A) + (B) having a flexural modulus included from 600 to less than 1000 MPa, in particular from 750 to less than 1000, as determined according to standard ISO 178:2010;
   (C) 0% to 20% by weight of fibres and/or fillers,
   (D) 0% to 20% of at least one impact modifier,
   (E) 0% to 5% of at least one additive chosen from stabilisers, dyes, with the exception of a photochromic dye, and plasticisers, or a mixture thereof,

for the manufacture of a sports article.

2. Composition according to Claim 1, **characterized in that** said composition has a transparency such that the transmittance at 560nm on a sheet 2mm thick is less than 70%, determined in accordance with standard ISO 13468-2:2006.

3. Composition according to either of Claims 1 and 2, **characterized in that** the copolyamide (B) has a crystallinity such that the enthalpy of fusion during the second heating in an ISO DSC (delta Hm(2)) is at least equal to 25 J/g, the weight being relative to the amount of amide units contained or of polyamide contained, this melting corresponding to that of the amide units.

4. Composition according to one of Claims 1 to 3, **characterized in that** the amide units (Ba1) represent at least 50% by weight of the copolyamide (B).

5. Composition according to one of Claims 1 to 4, **characterized in that** the polyether units (Ba2) represent at least 15% by weight of the copolyamide (B).

6. Composition according to one of Claims 1 to 5, **characterized in that** the polyether units (Ba2) are chosen from polyethylene glycol (PEG), polypropylene glycol (PPG), polytrimethylene glycol (PO3G), polytetramethylene glycol (PTMG) and mixtures thereof or copolymers thereof, in particular PTMG.

7. Composition according to one of Claims 1 to 6, in which the copolyamide (A) is present at from 65% to 95%, in particular from 65% to 85%.

8. Composition according to one of Claims 1 to 7, in which the copolyamide (B) is present at from 5% to 35%, especially from 5% to 30%, in particular from 5% to 20%.

9. Composition according to one of Claims 1 to 8, comprising:

   (A) 50% to 95%,
   (B) 5% to 50%,
   (E) 0% to 5%,

```
            the sum A + B + E being equal to 100%.
```

10. Composition according to one of Claims 1 to 8, comprising:

    (A) 50% to 95%,
    (B) 5% to 50%,
    (D) 0.1% to 10%,
    (E) 0% to 5%,

```
            the sum A + B + C + E being equal to 100%.
```

11. Composition according to one of Claims 1 to 8, comprising:

    (A) 50% to 95%,
    (B) 5% to 50%,
    (C) 2% to 10%, especially 5% to 10%, in particular 2% to 7%,
    (E) 0% to 5%,

```
            the sum A + B + C + E being equal to 100%.
```

12. Composition according to Claim 11, comprising fibres (C), in particular glass fibres or carbon fibres.

13. Composition according to one of Claims 1 to 12, **characterized in that** the polyamide (A) and/or the polyamide (Ba1) is chosen from PA11 and PA12, in particular PA11.

14. Composition according to Claim 13, **characterized in that** the polyamide (A) and/or the polyamide (Ba1) is (are) biobased.

15. Composition according to Claim 11, comprising fillers (C), in particular chosen from wollastonite and talc.

16. Composition according to Claim 15, **characterized in that** the polyamide (A) is chosen from PA-4.6; PA-6.6; PA-6.9; PA-6.10; PA-6.12; PA-10.12; PA-10.10 and PA-12.12, advantageously PA-10.10, and/or the polyamide Ba1 is chosen from PA11 and PA12, in particular PA11.

17. Composition according to one of Claims 11 to 16, **characterized in that** it has a flexural modulus included from 1400 to 2100 MPa, in particular from 1600 to 2100 MPa, as determined according to standard ISO 178:2010.

18. Use of a composition as defined in one of Claims 1 to 17, for the manufacture of a sports article, in particular a ski boot or a rigid boot with studs, such as a soccer or American football boot.

19. Use of a composition according to Claim 18, in which said composition is as defined in Claims 9 or 10 in which the sports article is a ski boot or a part of a ski boot.

20. Use of a composition according to Claim 18, in which said composition is as defined in Claims 11 or 12 in which the sports article is a rigid boot with studs, such as a soccer or American football boot.

21. Process for preparing a composition as defined in one of Claims 1 to 17, comprising a step of mixing the constituents (A), (B) and, where appropriate, (C) to (E) in the molten state, in particular in an extruder, at a temperature of between 230 and 330°C, and the recovery thereof in the form of granules, which granules will subsequently be injected, at a temperature of between 230 and 330°C, onto an injection-moulding machine so as to obtain the desired articles.

22. Process for preparing a composition as defined in one of Claims 1 to 17, comprising a step of mixing the constituents (A), (B) and, where appropriate, the constituents (C) to (E), which are in the form of granules, this mixture then being injected, at a temperature of between 230 and 330°C, onto an injection-moulding machine so as to obtain the desired articles.

23. Fashioned article, such as a fibre, fabric, film, sheet, rod, tube or injection-moulded part, in particular substantially devoid of transparency, comprising the composition as defined in one of Claims 1 to 17, which can be produced in the form of a dry mixture or after compounding on an extruder.

24. Article according to Claim 23, **characterized in that** it consists of a sports article, in particular a ski boot or a rigid boot with studs, such as a soccer or American football boot.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5140065 A
- FR 198519421
- US 20050234215 A
- US 20070179252 A
- US 4218549 A

- US 20130172484 A
- WO 07144531 A
- EP 1482011 A
- EP 0471566 A
- FR 2846332

**Littérature non-brevet citée dans la description**

- **KIRK-OTHMER.** Cycloaliphatic Amines. *Encyclopaedia of Chemical Technology,* 1992, 386-405